# EUROPÄISCHE PATENTANMELDUNG

(11) **EP 4 840 701 A1**
(43) Veröffentlichungstag der Anmeldung: **18.11.2026**
(21) Anmeldenummer: 26152000.1
(22) Anmeldetag: 15.01.2026
(51) Int. Cl.: B60R 15/04, B60J 5/04

(54) **UMFASSUNG EINES ZUGRIFFSBEREICHS ZU EINER VORRICHTUNG EINES FREIZEITFAHRZEUGS**

(30) Priorität: 14.05.2025 DE 102025118553; 17.11.2025 DE 102025147479
(71) Anmelder: Erwin Hymer Group SE, 88339 Bad Waldsee (DE)
(72) Erfinder: Mähler, Torsten, 01127 Dresden (DE)
(74) Vertreter: Müller Schupfner & Partner Patent- und Rechtsanwaltspartnerschaft mbB (Muc)

(57) **Zusammenfassung**

Es wird eine Umfassung (100) eines Zugriffsbereichs beschrieben,
wobei sich der Zugriffsbereich von einer Öffnung einer Außenwand (380) eines Freizeitfahrzeugs zu einer Vorrichtung (350) in einem Inneren des Freizeitfahrzeugs erstreckt, die Umfassung (100) aufweisend:
eine Bodenfläche (112), eine erste Seitenfläche (114) und eine zweite Seitenfläche (116), wobei die erste Seitenfläche (114) und die zweiten Seitenfläche (116) jeweils mit gegenüberliegenden äußeren Rändern der Bodenfläche (112) verbunden sind, um den Zugriffsbereich zumindest teilweise zu umfassen;
einen ersten Teilbereich (122) der Umfassung (100), wobei die Bodenfläche (112) und die erste Seitenfläche (114) und zweite Seitenfläche (116) in dem ersten Teilbereich (122) eingerichtet sind, flexibel zu sein, um insbesondere eine räumliche Fehl-Ausrichtung zwischen einer Umrandung der Öffnung und einer Positionierung der Vorrichtung (350) auszugleichen; und
einen flanschartigen Rand (130), der insbesondere an den ersten Teilbereich (122) angrenzt, wobei der flanschartige Rand (130) eingerichtet ist, die Umfassung (100), insbesondere bündig, mit der Umrandung der Öffnung zu verbinden.

## Beschreibung

Die vorliegende Erfindung betrifft eine Umfassung eines Zugriffsbereichs von einer Öffnung einer Außenwand eines Freizeitfahrzeugs zu einer Vorrichtung in einem Inneren des Freizeitfahrzeugs.

Toiletten-Systeme mit Entsorgungskassetten sind Stand der Technik in der Reisefahrzeugbranche für Freizeitfahrzeuge, wie Reisemobile oder Caravans. Solche Toiletten-Systeme sind eingerichtet, mittels eines Tanks, bzw. einer Kassette, der von außen über eine Serviceklappe entnommen werden kann, entsorgt zu werden. Eine typische Grundrissgestaltung von Freizeitfahrzeugen erfordert eine Platzierung eines solchen Toilette-Systems mit einem gewissen Abstand von einer Außenwand des Freizeitfahrzeugs, was zu hygienischen und ästhetischen Problemen führen kann.

Eine solche bauraumbedingte Lücke zwischen einer Vorrichtung in einem Inneren des Freizeitfahrzeugs, wie beispielsweise einem Toiletten-System, und einer Außenwand des Freizeitfahrzeugs soll so überbrückt, bzw. eingefasst, werden, dass hygienische und ästhetische Probleme überwunden werden können. Dabei soll eine Lösung an unterschiedliche Bauraum-Abstände und/oder Varianten der Vorrichtungen, insbesondere unterschiedlicher Hersteller, und/oder unterschiedliche verschließbare Öffnungen der Außenwand, adaptierbar sein.

Gemäß Aspekten der Erfindung wird eine Umfassung eines Zugriffsbereichs zu einer Vorrichtung, ein Adapter-Rahmen für eine Vorrichtung, ein System zum Umfassen eines Zugriffsbereichs und ein Freizeitfahrzeug gemäß den Merkmalen der unabhängigen Ansprüche vorgeschlagen. Vorteilhafte Ausgestaltungen sind Gegenstand der abhängigen Ansprüche sowie der nachfolgenden Beschreibung.

Gemäß einem Aspekt wird eine Umfassung eines Zugriffsbereichs vorgeschlagen, wobei sich der Zugriffsbereich von einer Öffnung einer Außenwand eines Freizeitfahrzeugs zu einer Vorrichtung in einem Inneren des Freizeitfahrzeugs erstreckt. Dabei weist die Umfassung zumindest eine Bodenfläche, eine erste Seitenfläche, eine zweite Seitenfläche und einen flanschartigen Rand auf. Die Umfassung ist darüber hinaus, insbesondere in eine Erstreckungsrichtung des umfassten Zugriffsbereichs, in einen ersten und einen zweiten Teilbereich unterteilt. Die erste Seitenfläche und die zweiten Seitenfläche sind jeweils mit gegenüberliegenden äußeren Rändern der Bodenfläche verbunden, um den Zugriffsbereich zumindest teilweise zu umfassen. Wie weiter unten dargestellt ist, kann die Umfassung auch eine Deckfläche aufweisen, um den Zugriffsbereich vollständig zu umfassen. Die Flächen, also zumindest die erste Seitenfläche, die zweite Seitenfläche und die Bodenfläche, des ersten Teilbereichs sind eingerichtet, flexibel zu sein. Basierend auf der Flexibilität des ersten Teilbereichs kann insbesondere eine räumliche Fehl-Ausrichtung zwischen einer Umrandung der Öffnung und einer Positionierung der Vorrichtung ausgeglichen werden. Dabei kann die Positionierung der Vorrichtung sowohl eine translatorische als auch eine rotatorische Komponente umfassen, die vorrangig auf Verbautoleranzen zurückgeführt werden können. Insbesondere kann der erste Teilbereich der Umfassung eingerichtet sein, eine translatorische Fehl-Ausrichtung in einem Bereich von +/-20 mm auszugleichen. Die Umfassung wird an einer Stirnseite bevorzugt durch einen flanschartigen Rand abgeschlossen, der zumindest teilweise an die beschriebenen Flächen der Umfassung angrenzt. Der flanschartige Rand, der insbesondere stirnseitig an den ersten Teilbereich angrenzt, ist eingerichtet, die Umfassung mit der Umrandung der Öffnung, insbesondere bündig, zu verbinden.

Dabei kann der Begriff "Umfassung" eine Verkleidung oder eine Einhausung oder eine Einfassung des Zugriffsbereichs bedeuten, die eine virtuelle dreidimensionale Oberfläche des Zugriffsbereichs zumindest teilweise umgibt. Die Flexibilität des ersten Teilbereichs kann bedeuten, dass der erste Teilbereich eingerichtet ist, gestaucht und/oder abgewinkelt zu werden. Ein flanschartiger Rand kann eine Ausgestaltung einer Stirnfläche eines ersten Bauteils sein, die eine, insbesondere von dem ersten Bauteil abstehende, Fläche zum Verbinden mit einem zweiten Bauteil aufweist, wobei die Fläche vorgesehen ist, das erste Bauteil flächig mit dem zweiten Bauteil, insbesondere bündig, zu verbinden.

Mit anderen Worten kann, mittels der Umfassung, der Zugriffsbereich zu der Vorrichtung an zumindest drei Seiten so eingefasst werden, dass der Zugriffsbereich gegenüber Verunreinigungen, beispielsweise beim Entsorgen eines Toiletten-Systems, geschützt ist, um insbesondere hygienische Anforderungen und/oder ästhetische Anforderungen zu erfüllen. Denn durch die Umfassung des Zugriffsbereichs kann vermieden werden, dass Verunreinigungen in Ritzen eines inneren Aufbaus des Freizeitfahrzeugs gelangen. Da typischerweise eine Blickrichtung auf den Zugriffsbereich von oben erfolgt, können durch eine Verblendung mittels der Umfassung auch offene Holzkanten und/oder Installationen, wie Schläuche und/oder Kabel, verdeckt werden. Vorzugsweise kann mit der Umfassung eine bauraumbedingte Lücke zwischen der Vorrichtung, wie beispielsweise einem Toilettenschacht eines Toiletten-System, und der Außenwand zumindest teilweise geschlossen werden, um evtl. Verunreinigungen beim einem Zugriff auf die Vorrichtung zu verhindern.

Vorteilhafterweise kann die Umfassung, basierend auf der Flexibilität, eingerichtet sein, an unterschiedliche Bauraumvarianten, Bauraumabstände und/oder Bauraumrichtungen angepasst werden.

Insbesondere kann ein Randbereich des ersten Teilbereichs der Umfassung, der dem flanschartigen Rand gegenüberliegt, direkt angrenzend an die Vorrichtung angeordnet werden.

Vorteilhafterweise kann die Umfassung, welche zwei Seitenflächen und die Bodenfläche aufweist, einteilig ausgestaltet sein. D. h. mit anderen Worten, dass die Umfassung aus einem Stück, beispielsweise mittels eines Spritzguss-Verfahrens, gefertigt ist. Insbesondere kann ein Material, welches die Flächen des ersten Teilbereichs bildet, elastische Eigenschaften aufweisen. Dadurch kann die Umfassung durch die Öffnung der Außenwand zur Montage der Umfassung leicht eingebracht werden.

Alternativ oder zusätzlich, kann eine Verbindung, die insbesondere eine gesamte jeweilige Verbindungslinie umfasst, der Bodenfläche mit der jeweiligen Seitenfläche fugenlos, beispielsweise mittels einer Verklebung oder einem Verschweißen, ausgestaltet sein.

Durch die einteilige Ausgestaltung bzw. das fugenlose Fügen der Flächen kann die Umfassung dicht gegenüber Flüssigkeiten, die insbesondere in dem Zugriffsbereich austreten können, eingerichtet sein. Die einteilige Ausgestaltung der Umfassung und/oder der fugenloser Aufbau der Umfassung ist Vorteilhafterweise leicht zu reinigen.

Die Umfassung kann als Einsatz für eine Abdichtung hinter jedweder Serviceklappe verwendet werden. Die Umfassung kann insbesondere für Vorrichtungen von Sanitäranlagen und/oder Frischwasser-Systemen verwendet werden. Dabei kann die Umfassung unterschiedliche räumliche Abmessungen in Bezug auf eine Höhe und/oder Breite und/oder Tiefe aufweisen.

Besonders vorteilhafterweise kann der erste Teilbereich mittels eines dehnbaren Materials und/oder einer, insbesondere um den ersten Teilbereich umlaufende, wellenartigen und/oder gefalteten Struktur der Flächen des ersten Teilbereichs eingerichtet sein, flexibel zu sein. Dabei kann die gefaltete Struktur als eine Struktur funktional und/oder strukturell entsprechend einem Faltenbalg ausgestaltet sein. Mittels der wellenartigen oder gefalteten Struktur der Flächen der Umfassung kann eine räumliche Anpassung der Umfassung an die räumliche Fehl-Ausrichtung gegenüber einem flexiblen Material weiter gesteigert werden.

Gemäß einem Aspekt wird vorgeschlagen, dass der flanschartige Rand als eine ebene Stirnfläche ausgestaltet ist. Dabei kann sich die Stirnfläche, insbesondere im Wesentlichen rechtwinklig zu den Flächen der Umfassung, ausgehend von dem stirnseitigen Rand des ersten Teilbereichs in einen Außenbereich der Umfassung erstrecken. Insbesondere kann die Stirnfläche eingerichtet sein, mit einem außen gelegenen Randbereich der Öffnung der Außenwand des Freizeitfahrzeugs zusammenzuwirken, um die Umfassung mit dem außen gelegenen Randbereich der äußeren Öffnung zu verbinden.

Vorteilhafterweise kann die Stirnfläche und/oder der stirnseitige Randbereich des ersten Teilbereichs eingerichtet sein, mit einem Rahmen einer Serviceklappe für die äußere Öffnung zusammenzuwirken, um die Verbindung in einer vorgesehenen Lage zu fixieren, indem insbesondere der Rahmen der Serviceklappe die Stirnfläche und/oder den stirnseitigen Randbereich des ersten Teilbereichs, in einer Montageposition des Rahmens der Serviceklappe, zumindest teilweise überlappt. Mit anderen Worten kann der flanschartige Rand des ersten Teilbereichs der Umfassung durch eine Montage der Serviceklappe in einer vorgesehenen Montageposition fixiert werden.

Alternativ oder zusätzlich, kann der flanschartige Rand entsprechend einer umlaufenden Flansch-Sicke in dem stirnseitigen Randbereich des ersten Teilbereichs ausgestaltet sein, wobei vorzugsweise die Flansch-Sicke in einen Innenbereich der Umfassung hinein ausgeformt sein kann. Insbesondere kann die Flansch-Sicke eingerichtet sein, mit einem Vorsprung in einem inneren Randbereich der Öffnung zusammenzuwirken, um die Umfassung mit dem Randbereich der äußeren Öffnung zu verbinden.

Vorteilhafterweise kann die umlaufende Flansch-Sicke und/oder der stirnseitige Randbereich des ersten Teilbereichs eingerichtet sein, mit dem Rahmen der Serviceklappe für die äußere Öffnung in einer vorgesehenen Lage für die Verbindung zusammenzuwirken, um die umlaufende Flansch-Sicke zu fixieren, indem vorzugsweise der Rahmen der Service-klappe die umlaufende Flansch-Sicke und/oder den stirnseitigen Randbereich des ersten Teilbereichs, in einer Montageposition des Rahmens der Serviceklappe, zumindest teilweise überlappt.

Gemäß einem Aspekt wird vorgeschlagen, dass die Umfassung einen zweiten Teilbereich aufweist, der, angrenzend an einen, der Stirnseite des ersten Teilbereichs, gegenüberliegenden Rand, mit dem ersten Teilbereich, insbesondere nahtlos, verbunden ist. Weiterhin kann der zweite Teilbereich an seiner offenen Stirnseite einen Koppel-Rahmen aufweisen oder eingerichtet sein, mit dem Koppel-Rahmen gekoppelt zu werden. Insbesondere kann der Koppel-Rahmen eingerichtet sein, die Umfassung mit einem Adapter-Rahmen der Vorrichtung lösbar zu verbinden.

Dabei kann der erste Teilbereich und der zweite Teilbereich mit dem Koppel-Rahmen mittels eines 2K oder 3K-Spritzguss-Verfahrens gefertigt werden wobei der erste Teilbereich und der zweite Teilbereich aus identischen, insbesondere elastischen, Materialien gefertigt sein können und der Koppel-Rahmen aus einem starren Material gefertigt sein kann. Dadurch können die Vorteile eines festen Materials, insbesondere in Bezug auf eine Verbindung oder einen Anschluss mit Vorteilen eines flexiblen Materials, insbesondere in Bezug auf einen Längenausgleich oder einen Toleranzausgleich, miteinander verbunden werden.

D. h. mit anderen Worten, dass nach diesem Konzept der Koppel-Rahmen aus einem eher starren Material gefertigt sein kann und der erste und der zweite Teilbereich aus einem eher flexiblen Material gefertigt ist. Insbesondere kann die so zusammengesetzte Umfassung als einteiliges Verbundbauteil mittels eines 2K- oder 3K-Spritzguss-Verfahrens gefertigt werden. Insbesondere wenn die Umfassung die genannten drei Flächen aufweist, kann der Koppel-Rahmen alternativ drei oder vier Schenkel aufweisen, die den Koppel-Rahmen bilden.

Das flexible Material des ersten Teilbereichs und/oder des zweiten Teilbereichs kann thermoplastisches Polyurethan und/oder Silikon und/oder eine Gewebeeinlage aufweisen. Vorteilhafterweise kann der Koppel-Rahmen und die offene Stirnseite des zweiten Teilbereichs eingerichtet sein, eine lösbare Verbindung miteinander auszubilden zu können. Insbesondere kann der zweite Teilbereich eingerichtet sein, so mit dem Koppel-Rahmen zusammenzuwirken, dass der zweite Teilbereich durch Ablängen an unterschiedliche Erstreckungslängen des Zugriffsbereichs adaptierbar ist.

D. h. mit anderen Worten, dass der zweite Teilbereich mit einer Länge in die Erstreckung des Zugriffsbereich so gefertigt wird, dass die Umfassung eine maximal benötigte Länge aufweisen kann. Eine kürzere Umfassung kann dadurch erreicht werden, dass der zweite Teilbereich eingerichtet ist, abgelängt zu werden. Dabei kann die lösbare Verbindung so ausgebildet werden, dass auch ein abgelängter zweiter Teilbereich mit dem Koppel-Rahmen verbunden werden kann. Der zweite Teilbereich kann somit eine Standardlänge von X mm aufweisen, die insbesondere vor dem Verbau auf die benötigte Länge von Y mm eingekürzt wird.

Dazu kann der Koppel-Rahmen ein umlaufendes Rahmen-Gehäuse aufweisen, welches einen innerhalb des Rahmen-Gehäuses freien Bereich, bzw. einen Zugriffsbereich, umschließt. Mit einem stirnseitigen Rand des Rahmen-Gehäuses ist, direkt anschließend an den stirnseitigen Rand, eine flanschartige ebene Stirnfläche verbunden, welche sich von dem stirnseitigen Rand ausgehend, in einen Außenbereich des Rahmen-Gehäuses erstreckt. Auf einer Außenseite des Rahmen-Gehäuses können, umlaufend um das Rahmen-Gehäuse, eine Vielzahl von Noppen oder Pins angeordnet sein, die eingerichtet sind, mit einer Lochreihe des zweiten Teilbereichs der Umfassung, zur Verbindung des Koppel-Rahmens mit der Umfassung, in Eingriff gebracht zu werden.

Insbesondere kann die Verbindung des Koppel-Rahmens mit der Umfassung zusätzlich an der Außenseite des Rahmen-Gehäuses eine Vielzahl von Klemmvorrichtungen, bzw. Niederhalterclips, aufweisen, in die eine Wandung des zweiten Teilbereichs der Umfassung eingeschoben werden kann. Dabei wirken die Vielzahl von Noppen mit der Vielzahl von Klemmvorrichtungen mit der Lochreihe der Wandung des zweiten Teilbereichs der Umfassung zusammen, um die Umfassung mit dem Koppel-Rahmen zu verbinden.

Besonders vorteilhafterweise kann ein Teil der Vielzahl der Klemmvorrichtungen eingerichtet sein, die Verbindung von Koppel-Rahmen mit der Umfassung mittels Sicherungsschrauben, die von einer Innenseite des Rahmen-Gehäuses in eine jeweilige Klemmvorrichtung eingeschraubt werden kann, verbessert werden.

Gemäß einem Aspekt wird vorgeschlagen, dass die Umfassung zusätzlich eine Deckfläche aufweist, sodass die Umfassung eine umlaufende Umfassungs-Fläche bildet, welche den Zugriffsbereich tunnelartig umschließt, und wobei die Deckfläche alle beschriebenen Merkmale der Bodenfläche und der ersten und der zweiten Seitenfläche analog aufweist. Ein Querschnitt senkrecht zu der Erstreckungsrichtung einer Wandung der so gestalteten Umfassung kann insbesondere viereckig mit abgerundeten Ecken sein.

Vorteilhafterweise kann die Umfassungs-Fläche, die die Deckfläche aufweist, einteilig ausgestaltet sein. Alternativ oder zusätzlich kann eine Verbindung der Deckfläche mit der jeweiligen Seitenfläche fugenlos ausgestaltet sein.

Besonders vorteilhafterweise kann eine Fläche, die durch den flanschartigen Rand der Stirnseite des ersten Teilbereichs gebildet wird, rechteckig ausgestaltet sein, wobei eine räumliche Gestalt des ersten Teilbereichs zumindest einseitig konisch geformt ist, so dass eine Fläche, die durch den der Stirnseite des ersten Teilbereichs gegenüberliegenden Rand gebildet wird, quadratisch ausgestaltet ist.

Alternativ kann die räumliche Gestalt des ersten Teilbereichs symmetrisch konisch ausgestaltet sein, sodass zwei sich gegenüberliegende Flächen des ersten Teilbereichs, ausgehend von dem flanschartigen Rand des ersten Teilbereichs, zu der Verbindung mit dem zweiten Teilbereich einen konisch sich erweiternden Verlauf aufweisen. D. h. mit anderen Worten, dass der erste Teilbereich räumlich symmetrisch oder asymmetrisch konisch geformt sein kann.

Durch die konische Gestalt des ersten Teilbereichs der Umfassung kann eine rechteckige Ausgestaltung des flanschartigen Randes des ersten Teilbereichs in einen quadratische Ausgestaltung der offenen Stirnfläche des zweiten Teilbereichs überführt werden, um eine rechteckige Öffnung der Außenwand des Freizeitfahrzeug, die senkrecht oder waagerecht orientiert ist, an einen quadratisch ausgestalteten Adapter-Rahmen anzuschließen. Somit kann die Umfassung Vorteilhafterweise sowohl für waagerecht als auch für senkrecht orientierte rechteckige Öffnungen der Außenwand des Freizeitfahrzeug verwendet werden.

Es wird ein Koppel-Adapter-Rahmen für eine Vorrichtung in einem Inneren des Freizeitfahrzeugs vorgeschlagen, wobei der Koppel-Adapter-Rahmens eine umlaufende Rahmenfläche, bzw. ein umlaufendes Rahmen-Gehäuse, eine erste Stirnseite und eine zweite Stirnseite aufweist. Dabei umschließt die umlaufende Rahmenfläche einen offenen Zugriffsbereich zu der Vorrichtung. Weiterhin ist die erste Stirnseite des Koppel-Adapter-Rahmens eingerichtet, eine mechanische Schnittstelle zu der Vorrichtung zu bilden. Und die zweite Stirnseite des Koppel-Adapter-Rahmens ist flanschartig ausgebildet, und eingerichtet, mit einem Koppel-Rahmen einer Umfassung zusammenzuwirken, eine lösbare Verbindung zu bilden.

Durch die Verwendung des Koppel-Adapter-Rahmens ist es Vorteilhafterweise möglich, die Umfassung des Zugriffsbereich an unterschiedliche Modelle von Vorrichtungen, wie beispielsweise unterschiedliche Modelle von Toiletten-Systemen, und unterschiedliche Verbau Situationen der Vorrichtungen, insbesondere in Bezug auf einen Abstand, eine Winkelstellung zur Außenwand, anzupassen.

Insbesondere kann die Vorrichtung eine Sanitärvorrichtung oder insbesondere eine Toiletten-System für ein Freizeitfahrzeug sein.

Entsprechend einem Aspekt kann der Koppel-Adapter-Rahmen, basierend auf einer rotations-symmetrischen Gestaltung, eingerichtet sein, mit dem Koppel-Rahmen in einer ersten und einer zweiten Orientierung des Koppel-Rahmens verbunden zu werden. Dabei kann die erste Orientierung des Koppel-Rahmens um 90 Grad, um eine Achse senkrecht auf einer freien Öffnung des Koppel-Rahmens, gegenüber der zweiten Orientierung gedreht sein.

Insbesondere kann der Koppel-Adapter-Rahmen dazu vier Schenkel aufweisen, die in einem rechten Winkel angeordnet sind, um einen quadratischen Koppel-Adapter-Rahmen zu formen.

Es wird ein Koppel-System zum Umfassen eines Zugriffsbereichs vorgeschlagen, wobei sich der Zugriffsbereich von einer Öffnung einer Außenwand eines Freizeitfahrzeugs zu einer Vorrichtung in einem Inneren des Freizeitfahrzeugs erstreckt, wobei das Koppel-System eine Umfassung und einen Koppel-Adapter-Rahmen aufweist. Dabei ist die Umfassung entsprechend einer der oben beschriebenen Umfassungen eingerichtet. Und der Koppel-Adapter-Rahmen ist entsprechend einer der oben beschriebenen Koppel-Adapter-Rahmen eingerichtet. Weiterhin weist die Umfassung einen Koppel-Rahmen auf, wobei der Koppel-Adapter-Rahmen mittels des Koppel-Rahmens mit der Umfassung lösbar verbunden ist.

Insbesondere ist das Koppel-System eingerichtet, eine bauraumbedingte Lücke zwischen der Vorrichtung, wie beispielsweise einem Toilettenschacht eines Toiletten-Systems und der Außenwand zumindest teilweise zu umschließen, um evtl. Verunreinigungen beim einem Zugriff auf die Vorrichtung zu verhindern. Somit kann ein Raum zwischen dem verbauten Toiletten-System und der Serviceklappe einfach und effizient gedichtet, und insbesondere abgedeckt, werden.

Vorzugsweise kann das Koppel-System, mittels des flexiblen ersten Teilbereichs der Umfassung, auf einfache Weise, einen Längenausgleich und/oder einen Winkelausgleich für einen durchgehend geschützten Zugriffsbereich zwischen der Vorrichtung und der Öffnung in der Außenwand des Freizeitfahrzeug bereitstellen.

Es wird ein Verfahren zum Montieren eines Koppel-Systems zum Umfassen eines Zugriffsbereichs vorgeschlagen, wobei sich der Zugriffsbereich von einer Öffnung einer Außenwand eines Freizeitfahrzeugs zu einer Vorrichtung in einem Inneren des Freizeitfahrzeugs erstreckt, welches die folgenden Schritte aufweist. In einem Schritt wird ein Koppel-Adapter-Rahmen, mittels einer Schnittstelle des Koppel-Adapter-Rahmens, mit der Vorrichtung verbunden. Dabei kann die Schnittstelle des Koppel-Adapter-Rahmens die erste Stirnfläche des Adapter-Rahmens sein. In einem weiteren Schritt wird ein flanschartiger Rand der Umfassung mit einer Umrandung einer Öffnung eine Außenwand des Freizeitfahrzeug verbunden. In einem weiteren Schritt wird ein Koppel-Rahmen, der mit der Umfassung gekoppelt ist, mit einer zweiten Stirnseite des Koppel-Adapter-Rahmens verbunden, wobei die Umfassung, der Koppel-Adapter-Rahmen und der Koppel-Rahmen so eingerichtet sind, dass der Koppel-Rahmen, mittels umlaufend positionierten Rastelementen, mit der zweiten Stirnseite des Koppel-Adapter-Rahmens, durch die Öffnung der Außenwand des Freizeitfahrzeug hindurch koppelbar sind.

Mit anderen Worten, kann das Verfahren vorsehen, dass der Koppel-Adapter mit dem zweiten Teilbereich der Umfassung zu einer Zwischenbaugruppe verbunden werden. Dazu kann der passend abgelängte zweite Teilbereich der Umfassung über eine außen liegende Fläche des Rahmen-Gehäuses des Koppel-Rahmens gezogen und, mittels auf der außen liegenden Fläche des Rahmen-Gehäuses umlaufend angeordneter Noppen, bzw. Pins, fixiert werden. Die so gebildete Zwischenbaugruppe kann mit der Fahrzeugau-ßenwand im Zuge einer Montage einer Serviceklappe verbunden und/oder fixiert werden. Je nach Art des Fahrzeugaufbaus erfolgt kann diese Verbindung entweder im Vorfeld oder direkt am Fahrzeug erfolgen. Die Verbindung des flanschartigen Randes des ersten Teilbereichs ist oben für unterschiedliche Ausführungsformen des flanschartigen Randes, zusammen mit einer möglichen Fixierung mittels des Rahmens der Serviceklappe, beschrieben.

Der Koppel-Adapter-Rahmen kann als Baugruppe mit der Vorrichtung, wie beispielsweise einem Toiletten-System, an einer Seite der Vorrichtung, die der Außenseite des Freizeitfahrzeug zugewandt ist, montiert werden. Dazu kann beispielsweise der Koppel-Adapter-Rahmen mit einer Trennwand, bzw. Innenwand, zwischen der Vorrichtung und einer Außenwand des Freizeitfahrzeug und/oder mit Teilen der Vorrichtung und/oder mit einem Boden des Freizeitfahrzeugs verbunden und/oder verschraubt werden.

Die zweite Stirnseite des Koppel-Adapter-Rahmens kann mit dem Koppel-Rahmen der Umfassung final in dem Freizeitfahrzeug erfolgen. Dazu kann die Zwischenbaugruppe mit dem Koppel-Rahmen stirnflächig gegen die zweite Stirnseite des Koppel-Adapter-Rahmens geschoben und mit umlaufend positionierten Rastelementen in die entsprechenden Aussparungen der zweiten Stirnseite des Koppel-Adapter-Rahmens eingeführt werden. Anschließend kann der Koppel-Rahmen, beispielsweise durch Verschieben in Richtung der Bodenfläche verrastet werden.

Vorteilhafterweise kann somit die Umfassung des Zugriffsbereichs in einfacher Weise mittels des Koppel-Rahmens mit dem vormontierten Adapter-Rahmen, und somit mit der Vorrichtung, die mit dem Koppel-Adapter-Rahmen gekoppelt ist, verbunden werden.

Gemäß einem weiteren Aspekt der Erfindung, der nachfolgend genauer beschrieben wird, kann der flanschartige Rand der Umfassung entsprechend einer ersten Sicke ausgestaltet sein, wobei sich die erste Sicke, insbesondere im Wesentlichen rechtwinklig zu den Seiten- und Boden-Flächen der Umfassung, ausgehend von einer Stirnseite des ersten Teilbereichs in einen Außenbereich der Umfassung erstrecken. Dabei kann eine stirnseitige Fläche der ersten Sicke eingerichtet sein, sich flanschartig an einer inneren Oberfläche der äußeren Wand abzustützten.

Vorteilhafterweise kann die erste Sicke eine stabile und sichere Verbindungsmöglichkeit zur Außenwand des Fahrzeugs bilden. Dabei kann die erste Sicke eingerichtet sein, mit einem, insbesondere im Fahrzeuginneren gelegenen, Randbereich der Öffnung der Aussenwand zusammenzuwirken, um die Umfassung mit dem innen gelegenen Randbereich der äußeren Öffnung der Aussenwand zu verbinden. Dadurch kann eine feste und zuverlässige Verbindung gewährleistet werden, die auch mechanischen Belastungen standhält.

Der Randbereich der Öffnung kann, insbesondere mittels eines Innen-Rahmens eingerichtet sein, eine erste Nut auszubilden. Dabei kann die erste Nut und die erste Sicke eingerichtet sein, zusammenzuwirken, um die erste Sicke mit dem Randbereich der Öffnung der Außenwand zu verbinden. Die Nut-Sicke-Verbindung ermöglicht eine einfache und werkzeuglose Montage sowie Demontage.

Gemäß einem Aspekt wird vorgeschlagen, dass die erste Sicke eingerichtet ist, eine erste Fülleinlage aufzunehmen. Insbesondere mittels der ersten Fülleinlage kann die erste Sicke kraftschlüssig und/oder formschlüssig mit der ersten Nut zusammenwirken, um die erste Sicke mit dem Randbereich der Öffnung zu verbinden besonders vorteilhafterweise kann die erste Fülleinlage als Drahtspange oder als Keder ausgebildet sein. Dabei erhöht die Verwendung einer Fülleinlage die Stabilität und Dichtigkeit der Verbindung und erleichtert die Montage.

Vorteilhafterweise kann die Umfassung einen zweiten Teilbereich aufweisen, der, angrenzend an einen, der Stirnseite des ersten Teilbereichs gegenüberliegenden, Rand des ersten Teilbereichs, mit dem ersten Teilbereich verbunden ist. Dabei kann der zweite Teilbereich an seiner Stirnseite eine zweite Sicke aufweisen. Wobei sich die zweite Sicke, insbesondere im Wesentlichen rechtwinklig zu den Seiten- und Boden-Flächen der Umfassung, ausgehend von der Stirnseite des zweiten Teilbereichs, in einen Außenbereich der Umfassung (100) erstrecken kann. D. h. mit anderen Worten, dass der zweite Teilbereich sich an den Rand des ersten Teilbereichs anschließt, der der Stirnseite des ersten Teilbereichs gegenüberliegt. Dabei kann die zweite Sicke ermöglichen, eine weitere Verbindung, etwa zu einem Rahmen-Adapter oder einer Vorrichtung im Inneren des Freizeitfahrzeugs, zu realisieren.

D. h. die zweite Sicke kann eingerichtet sein, mit einer Stirnseite eines Rahmen-Adapters oder einem Randbereich der Vorrichtung 350 zusammenzuwirken, um die Umfassung mit einer Stirnseite des Rahmen-Adapters oder dem Randbereich der Vorrichtung zu verbinden. Diese Merkmale der Umfassung können eine Integration verschiedener Komponenten ermöglichen und eine Modularität des Systems erhöhen.

Vorteilhafterweise kann die Stirnseite des Adapters oder der Randbereich der Vorrichtung eine Adapter-Nut aufweisen. Dabei kann die Adapter-Nut und die zweite Sicke eingerichtet sein, zusammenzuwirken, um die zweite Sicke mit der Stirnseite des Adapters oder dem Randbereich der Vorrichtung zu verbinden. Dabei kann die Adapter-Nut eine sichere und passgenaue Verbindung zwischen der Umfassung und dem Rahmen-Adapter ermöglichen.

Insbesondere kann die zweite Sicke eingerichtet sein, eine zweite Fülleinlage aufzunehmen, so dass vorteilhafterweise die zweite Sicke mittels der zweiten Fülleinlage kraftschlüssig und/oder formschlüssig mit der Adapter-Nut zusammenwirkt, um die zweite Sicke mit der Stirnseite des Rahmen-Adapters oder dem Randbereich der Vorrichtung zu verbinden. Besonders vorteilhafterweise kann die zweite Fülleinlage als Drahtspange oder als Keder ausgebildet sein. Die Fülleinlage kann für eine zuverlässige und dichte Verbindung sorgen, die auch bei Vibrationen und Bewegungen stabil bleibt.

Gemäß einem Aspekt wird vorgeschlagen, dass die Umfassung zusätzlich eine Deckfläche aufweist, sodass die Umfassung eine umlaufende Umfassungs-Fläche bildet, welche den Zugriffsbereich tunnelartig umschließt. Dabei kann die Deckfläche alle beschriebenen Merkmale der Bodenfläche und der ersten Seitenfläche und der zweiten Seitenfläche analog, d. h. funktional und strukturell entsprechend, aufweisen. Vorteilhafterweise kann die tunnelartige Umfassung insbesondere einen Innenraum des Freizeitfahrzeugs vor Schmutz, Feuchtigkeit und mechanischen Einflüssen schützen.

Vorteilhafterweise können die zwei Seitenflächen und die Bodenfläche einteilig ausgestaltet sein. Die zwei Seitenflächen können zum Verbinden mit korrespondierend ausgestalteten zweiten Koppeleinrichtungen der Deckfläche jeweils eine erste Koppeleinrichtung aufweisen. Insbesondere können die erste Koppeleinrichtung und die zweite Koppeleinrichtung eingerichtet sein, so zusammenzuwirken, dass die Umfassung flexibel ist, um insbesondere die räumliche Fehl-Ausrichtung zwischen der Umrandung der Öffnung der Außenwand und der Positionierung der Vorrichtung auszugleichen. Dabei kann die jeweilige Verbindung der Deckfläche mit den Seitenflächen lösbar ausgestaltet sein.

Die beschriebenen Koppeleinrichtungen ermöglichen vorteilhafter Weise eine schnelle und flexible Montage sowie Anpassung an verschiedene Einbausituationen.

Es wird ein Adapter-Rahmen mit einer Rahmenfläche einer ersten Stirnseite und einer zweiten Stirnseite für eine Vorrichtung in einem Inneren des Freizeitfahrzeugs vorgeschlagen. Dabei umschließt die Rahmenfläche einen offenen Zugriffsbereich zu der Vorrichtung zumindest teilweise. Die erste Stirnseite des Adapter-Rahmens ist eingerichtet, eine mechanische Schnittstelle zu der Vorrichtung zu bilden. Wobei die zweite Stirnseite des Adapter-Rahmens eine Adapter-Nut aufweist, und wobei die Adapter-Nut eingerichtet ist, mit einer zweiten Sicke einer Umfassung zusammenzuwirken, um die Umfassung mit der zweiten Stirnseite des Adapter-Rahmens zu verbinden. Der Adapter-Rahmen erleichtert vorteilhafter Weise eine Integration und einen Wechsel von Vorrichtungen im Freizeitfahrzeug.

Insbesondere kann der Adapter-Rahmen zweiteilig ausgeführt sein, wobei die Rahmenfläche zwei Seitenflächen und eine Bodenfläche aufweist, und wobei die zwei Seitenflächen und die Bodenfläche einteilig ausgestaltet sind. Die zwei Seitenflächen können zum Verbinden mit korrespondierend ausgestalteten zweiten Adapter-Koppeleinrichtungen einer Deckfläche jeweils eine erste Adapter-Koppeleinrichtung aufweisen. Die zweiteilige Ausführung kann eine Flexibilität bei der Anpassung an verschiedene Vorrichtungen bieten.

Gemäß einem Aspekt kann ein Material des Adapterrahmens verschieden von dem Material der Umfassung sein. Während die Umfassung vorteilhafter Weise ein elastisches Material aufweist, kann der Adapter-Rahmen aus einem starren Material gefertigt sein. Das flexible Material des ersten Teilbereichs und/oder des zweiten Teilbereichs kann thermoplastisches Polyurethan und/oder Silikon und/oder eine Gewebeeinlage aufweisen.

Die Vorrichtung kann eine Sanitärvorrichtung sein, insbesondere ein Toiletten-System für das Freizeitfahrzeug. Diese spezielle Ausgestaltung der Umfassung für Sanitärsysteme erhöht die Hygiene und Wartungsfreundlichkeit.

Es wird ein System zum Umfassen eines Zugriffsbereichs zu einer Vorrichtung in einem Inneren eines Freizeitfahrzeugs mit einer Umfassung und einem Adapterrahmen vorgeschlagen. Dabei kann die Umfassung entsprechend einer der oben beschriebenen Umfassung ausgestaltet sein. Und der Adapter-Rahmen kann entsprechend einem der oben beschriebenen Adapter-Rahmen ausgestaltet sein. Dabei weist die Umfassung eine zweite Sicke auf und der Adapter-Rahmen kann mittels eines Zusammenwirkens der zweiten Sicke mit einer Adapter-Nut des Adapter-Rahmens mit der Umfassung lösbar verbunden sein. Dieses System ist vorteilhafterweise modular und ermöglicht einen einfachen Austausch oder die Wartung von Komponenten.

Es wird ein Freizeitfahrzeug, mit einem Zugriffsbereich und einer Umfassung vorgeschlagen. Dabei erstreckt sich der Zugriffsbereich von einer Öffnung einer Außenwand des Freizeitfahrzeugs zu einer Vorrichtung in einem Inneren des Freizeitfahrzeugs.

Die Umfassung des Zugriffsbereichs umfasst den Zugriffsbereich zumindest teilweise, wobei insbesondere der Adapter-Rahmen eingerichtet ist, bündig mit der Umfassung gekoppelt zu werden. Besonders vorteilhafterweise ist die Umfassung gemäß einem der oben beschriebenen Umfassungen ausgestaltet. Dadurch kann eine Zugänglichkeit und Dichtigkeit des Zugriffsbereichs verbessert werden und die Integration verschiedener Vorrichtungen im Freizeitfahrzeug erleichtert werden.

Im Folgenden wird die vorliegende Erfindung anhand einiger Ausführungsformen und den beigefügten Zeichnungen im Detail beschrieben:

### Dabei zeigt:

- Fig. 1a, b: eine isometrische Ansicht einer Umfassung eines Zugriffsbereichs;
- Fig. 2a: eine isometrische Ansicht eines Adapter-Rahmens;
- Fig. 2b: eine isometrische Ansicht eines Koppel-Rahmens;
- Fig. 2c: eine isometrische Ansicht einer Umfassung;
- Fig. 3: eine isometrische Ansicht auf ein System zum Umfassen eines Zugriffsbereichs;
- Fig. 4: eine isometrische Ansicht auf ein weiteres System zum Umfassen eines Zugriffsbereichs;
- Fig. 5: eine Kopplung eines Adapter-Rahmens mit einem Koppel-Rahmen;
- Fig. 6: ein Adapter-Rahmen angeordnet an ein Toiletten-System;
- Fig. 7: eine Verbindung eines flanschartigen Randes mit umlaufender Sicke mit einem Inneren Randbereich der Öffnung;
- Fig. 8: eine Verbindung eines flanschartigen Randes mit ebener Standfläche mit einem außen gelegenen Randbereich der Öffnung;
- Fig 9: skizziert schematisch eine isometrische Ansicht einer Umfassung;
- Fig. 10: skizziert schematisch in einer isometrischen Ansicht eine Koppeleinrichtung;
- Fig. 11a, b: skizzieren schematisch in einer isometrischen Ansicht, eine Verbindung der Umfassung mit der Innenseite der Außenwand;
- Fig. 12: skizziert schematisch in einer isometrischen Ansicht ein Zusammenwirken eines Innen-Rahmens mit der Umfassung;
- Fig. 13: skizziert schematisch in einer isometrischen Ansicht einen zweiteiligen Adapter-Rahmen;
- Fig. 14: skizziert schematisch in einer isometrischen Ansicht ein System zum umfassen des Zugriffsbereichs zu der Vorrichtung;
- Fig. 15: skizziert schematisch eine isometrische Ansicht in die geöffnete Service-Klappe; und
- Fig. 16: skizziert schematisch in einer isometrischen Ansicht eine Fülleinlage, die als Drahtbügel ausgebildet ist.

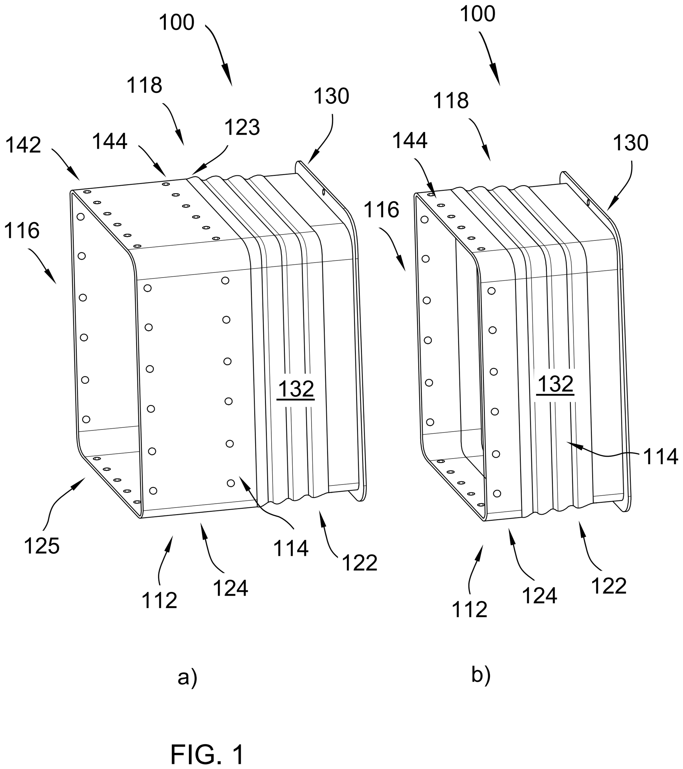

Die Figur 1a skizziert schematisch eine Umfassung 100 für einen Zugriffsbereich zu einer Vorrichtung, mit einer Bodenfläche 112, einer ersten Seitenfläche 114, einer zweiten Seitenfläche 116 und einer Deckfläche 118, wobei die erste Seitenfläche 114 und die zweiten Seitenfläche 116 jeweils mit gegenüberliegenden äußeren Rändern der Bodenfläche 112 verbunden sind. Die Verbindung der zwei Seitenflächen 114, 116 mit der Bodenfläche 112 und die Verbindung der zwei Seitenflächen 114, 116 mit der Deckfläche 118 sind einteilig und fugenlos ausgestaltet.

Die oben genannten Flächen 112, 114, 116 und 118 des ersten Teilbereichs 122 der Umfassung 100 sind, mittels einer wellenartigen Struktur 132 und einem flexiblen Material der genannten Flächen 112,114,116 und 118, eingerichtet, flexibel zu sein. Der erste Teilbereich 122 weist einen flanschartigen Rand 130 auf, der stirnseitig an den ersten Teilbereich 122 angrenzt, wobei der flanschartige Rand 130 eingerichtet ist, mit einer Umrandung einer Öffnung an einer Außenwand 380 eines Freizeitfahrzeugs verbunden zu werden.

Der zweite Teilbereich 124 der Umfassung 100 grenzt an einen, der Stirnseite des ersten Teilbereichs 122, gegenüberliegenden, Rand 123 des ersten Teilbereichs 122 an, und ist mit dem ersten Teilbereich 122 einstückig und nahtlos verbunden. Der zweite Teilbereich 124 ist an seiner offenen Stirnseite 125 eingerichtet, mit einem Koppel-Rahmen, mittels einer Vielzahl von umlaufend angeordneten Bohrungen 142, 144, gekoppelt zu werden. Da der zweite Teilbereich 124 zumindest zwei umlaufende Reihen von Bohrungen 142, 144 aufweist, und der Koppel-Rahmen mit dem zweiten Teilbereich 124 und einer der umlaufenden Reihen von Bohrungen 142,144 zusammenwirkt, um eine lösbare Verbindung bereitzustellen, ist der zweite Teilbereich 124 eingerichtet, durch Ablängen des zweiten Teilbereichs 124 an unterschiedliche Erstreckungslängen des Zugriffsbereichs adaptiert zu werden.

Die Figur 1b skizziert schematisch eine Umfassung 100, die der Umfassung 100 der Figur 1a bis auf den abgelängten zweiten Teilbereich 124 entspricht. Dadurch kann der Koppel-Rahmen mit der zweiten umlaufenden Reihe von Bohrungen 144 zusammenwirken, um den Koppel-Rahmen mit der Umfassung 100 zu verbinden.

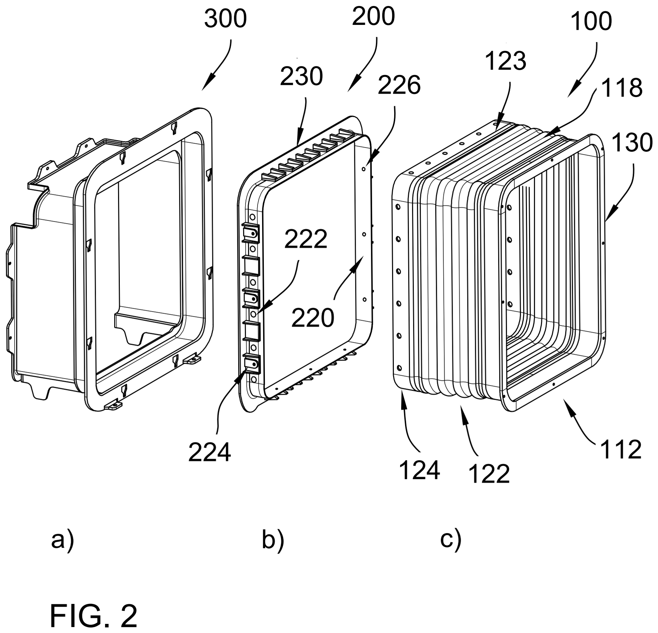

Die Figuren 2a, 2b, und 2c sind entsprechend einer Explosionszeichnung angeordnet, um eine Anordnung des Adapter-Rahmens 300 zu dem Koppel-Rahmen 200 und zu der Umfassung 100, in einem System zum Umfassen eines Zugriffsbereichs zu skizzieren.

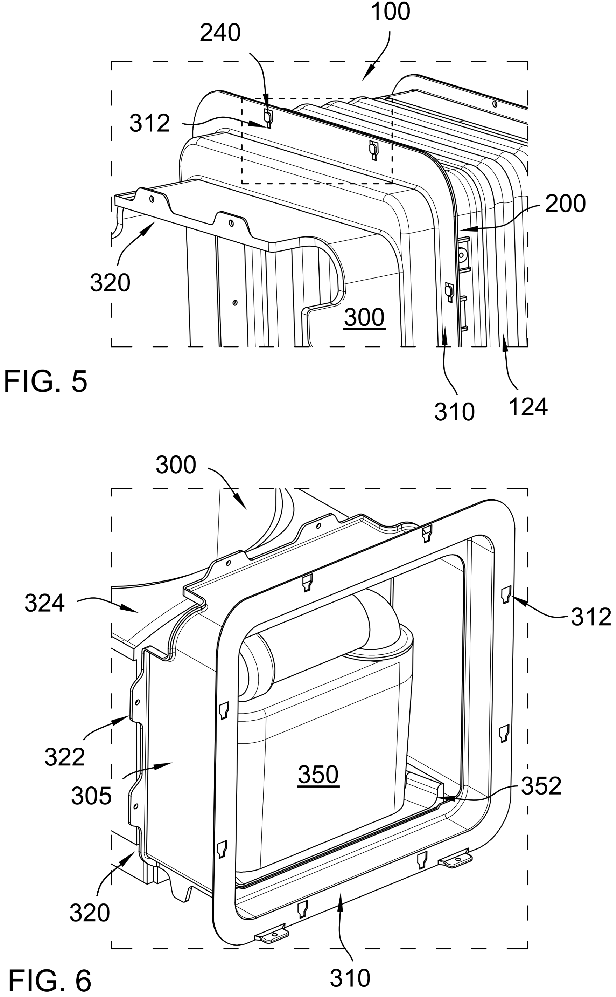

Die Figur 2a skizziert schematisch in einer isometrischen Ansicht einen Adapter-Rahmen 300, der, zusammen mit der Figur 6, näher erläutert wird.

Die Figur 2b skizziert schematisch in einer isometrischen Ansicht einen Koppel-Rahmen 200. Dabei weist der Koppel-Rahmen 200 ein umlaufendes Rahmen-Gehäuse 220 auf, welches einen innerhalb des Rahmen-Gehäuses 220 freien Bereich, bzw. einen Zugriffsbereich, umschließt. Mit einem stirnseitigen Rand des Rahmen-Gehäuses 220 ist, direkt anschließend an den stirnseitigen Rand, eine flanschartige ebene Stirnfläche 230 verbunden, welche sich von dem stirnseitigen Rand ausgehend, in einen Außenbereich des Rahmen-Gehäuses 220 erstreckt. Auf einer Außenseite des Rahmen-Gehäuses 220 sind, umlaufend um das Rahmen-Gehäuse, eine Vielzahl von Noppen 222 angeordnet, die eingerichtet sind, mit der Lochreihe 142, 144 des zweiten Teilbereichs 124 der Umfassung 100, zur Verbindung des Koppel-Rahmens 200 mit der Umfassung 100, in Eingriff gebracht zu werden. Für eine verstärkte Verbindung des Koppel-Rahmens 200 mit der Umfassung 100 sind zusätzlich an der Außenseite des Rahmen-Gehäuses 220 eine Vielzahl von Klemmvorrichtungen 224, bzw. Niederhalterclips 224, angeordnet, in die eine Wandung des zweiten Teilbereichs 124 der Umfassung 100 eingeschoben werden kann. Dabei wirken die Vielzahl von Noppen 222 mit der Vielzahl von Klemmvorrichtungen 224 mit der Lochreihe 142, 144 der Wandung des zweiten Teilbereichs 124 der Umfassung 100 zusammen, um die Umfassung 100 mit dem Koppel-Rahmen 200 zu verbinden. Dabei kann ein Teil der Vielzahl von Klemmvorrichtungen 224 eingerichtet sein, die Verbindung von Koppel-Rahmen 200 mit der Umfassung 100 mittels Sicherungsschrauben 226, die von einer Innenseite des Rahmen-Gehäuses 220 in eine jeweilige Klemmvorrichtung 224 eingeschraubt werden können, verbessert werden.

Die Figur 2c skizziert schematisch in einer isometrischen Ansicht die Umfassung 100, wie sie oben beschrieben wurde. Dabei ist eine Fläche, die durch den flanschartigen Rand 130 der Stirnseite des ersten Teilbereichs 122 gebildet wird, rechteckig ausgestaltet. In der Figur 2c ist dargestellt, dass eine Fläche, die durch den der Stirnseite des ersten Teilbereichs 122 gegenüberliegenden Rand gebildet wird, quadratisch ausgestaltet ist. Da der zweite Teilbereich 124 der Umfassung 100 direkt an den ersten Teilbereich 122 angrenzend angeordnet ist, ist auch eine offene Stirnseite des zweiten Teilbereichs 124 der Umfassung 100 quadratisch ausgestaltet. Daher ist der erste Teilbereich 122 zumindest einseitig konisch geformt. Daher ist weiterhin die Bodenfläche 112 und die Deckfläche 118 des ersten Teilbereichs 122 entsprechend einem Trapez ausgestaltet, um die konische Form des ersten Teilbereichs 122 zu erreichen. In der Figur 2c ist der erste Teilbereich 122 symmetrisch ausgestaltet, so dass der erste Teilbereich 122 zweiseitig konisch geformt ist.

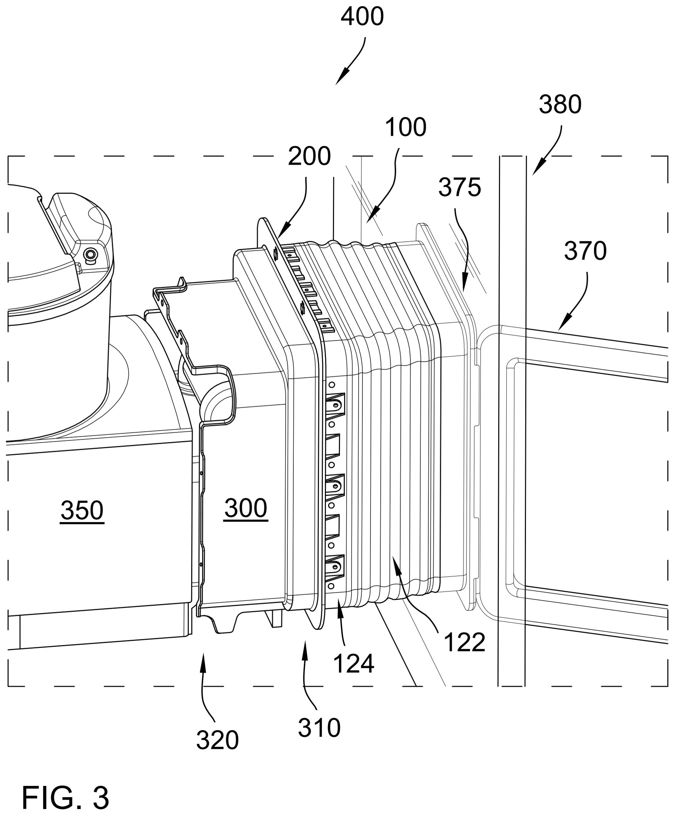

Die Figur 3 skizziert schematisch in einer isometrischen Ansicht ein Koppel-System 400 zum Umfassen eines Zugriffsbereichs, wobei sich der Zugriffsbereich von einer Öffnung einer Außenwand eines Freizeitfahrzeugs 380 zu einer Vorrichtung 350 in einem Inneren des Freizeitfahrzeugs erstreckt. Die Vorrichtung 350 der Figur 3 ist ein Toiletten-System 350, welches einen hier nicht dargestellten Tank aufweist, auf den über den Zugriffsbereich, der entsprechend einem Tunnel ausgestaltet sein kann, zugegriffen werden kann.

Das Koppel-System 400 weist eine Umfassung 100 mit einem ersten Teilbereich 122 und einem zweiten Teilbereich 124 auf, wie sie oben beschrieben sind. Dabei ist der erste Teilbereich 122 der Umfassung 100 räumlich symmetrisch konisch gestaltet. Damit kann eine aufrecht ausgerichtete rechteckige Form der Öffnung der Außenwand 380 eines Freizeitfahrzeugs in eine quadratische Form eines stirnseitigen Randbereichs des zweiten Teilbereichs 124 der Umfassung 100, insbesondere für die Verbindung mit dem Koppel-Rahmen 200, adaptiert werden. Der Koppel-Rahmen 200 ist dabei, wie oben beschrieben wurde, mit der Umfassung 100 mechanisch lösbar verbunden. Weiterhin weist das Koppel-System 400 einen Koppel-Adapter-Rahmen 300 auf, der mit einer ersten Stirnseite des Koppel-Adapter-Rahmens eingerichtet ist, eine mechanische Schnittstelle 320 zu dem Toiletten-System 350 zu bilden. Diese Schnittstelle 320 kann der jeweiligen Vorrichtung angepasst werden. Für das in der Figur 3 beschriebene Toiletten-System 350 ist der Koppel-Adapter-Rahmen so ausgeführt, dass er einen Teil des Toiletten-System s 350 umschließt und rückseitig an eine Trennwand zwischen dem Toiletten-System 350 und einer bauraumbedingten Lücke zu der Außenwand 380 mechanisch gekoppelt werden kann. Weiterhin ist der Koppel-Adapter-Rahmen 300 mittels einer zweiten Stirnseite 310, die flanschartig ausgestaltet ist, eingerichtet, mit dem Koppel-Rahmen 200 der Umfassung 100 lösbar verbunden zu werden. Die Öffnung der Außenwand 380 des Freizeitfahrzeugs kann durch eine Serviceklappe 370 verschlossen werden, wobei ein Rahmen 375 der Serviceklappe 370 die Öffnung der Außenwand 380 offen umschließt.

Durch den beschriebenen Aufbau des Koppel-Systems 400 kann ein gegenüber einem Innenraum des Freizeitfahrzeugs getrennter Tunnel, um den Zugriffsbereich zu dem Toiletten-System 350 herum, bereitgestellt werden, der insbesondere den Innenraum des Freizeitfahrzeugs vor Kontaminationen durch Flüssigkeiten schützen kann.

Darüber hinaus kann das Koppel-System 400 fertigungstechnisch günstig montiert werden, indem in einem vorbereitenden Verfahrensschritt, der Koppel-Adapter-Rahmen 300, mittels der Schnittstelle 320 des Koppel-Adapter-Rahmens 300 mit der Vorrichtung 350, hier also dem Toiletten-System, verbunden wird. In einem weiteren vorbereitenden Verfahrensschritt kann der flanschartige Rand 130 der Umfassung 100 mit einer Umrandung der Öffnung der Außenwand 380 des Freizeitfahrzeug verbunden werden. Diese beiden vorbereitenden Verfahrensschritte können unabhängig voneinander erfolgen. Das Koppel-System 400 kann dann mit einem weiteren Verfahrensschritt fertiggestellt werden, indem der Koppel-Rahmen 200, der mit der Umfassung 100 gekoppelt ist, mit der zweiten Stirnseite 310 des Koppel-Adapter-Rahmens 300 verbunden wird. Dabei sind der Koppel-Rahmen 200 und die zweite Stirnseite 310 des Koppel-Adapter-Rahmens eingerichtet, so miteinander zu wechselwirken, dass die Verbindung, die mittels umlaufend positionierter Rastelemente, erfolgen kann, durch die Öffnung der Außenwand des Freizeitfahrzeug hindurch verbunden werden können.

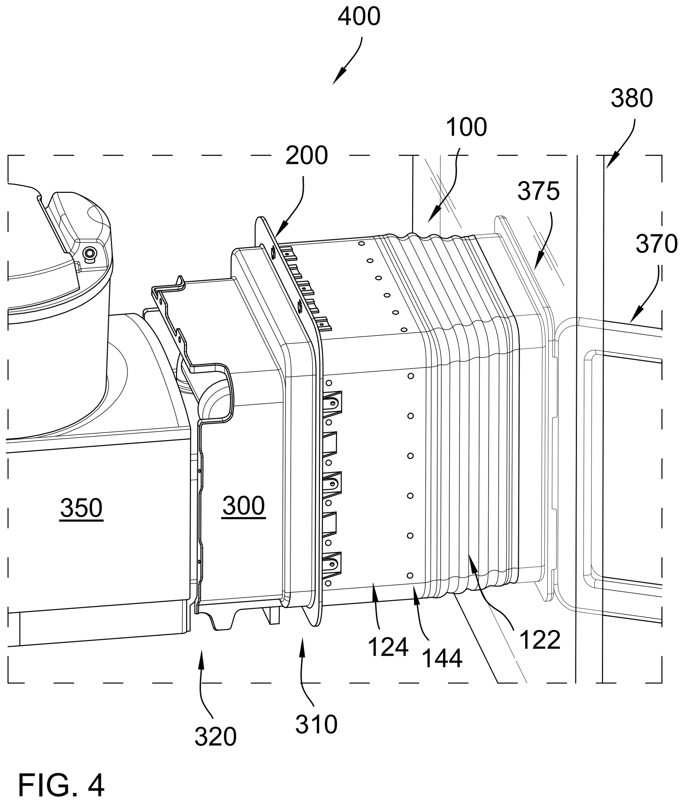

Mit der Figur 4 wird ein dem Koppel-System 400 der Figur 3 entsprechendes Koppel-System 400 zum Umfassen eines Zugriffsbereich in einer isometrischen Ansicht schematisch dargestellt. Im Unterschied zu der Figur 3 ist die bauraumbedingte Lücke zwischen dem Toiletten-System 350 und der Außenwand 380 in Bezug auf eine Erstreckungsrichtung des Zugriffsbereich größer. Um das Koppel-System 400 an diese größere Lücke anzupassen, ist der zweite Teilbereich 124 der Umfassung 100 des Zugriffsbereich mit einer größeren Länge in Erstreckungsrichtung des Zugriffsbereich ausgestaltet. Ein zweiter Teilbereich 124 der Umfassung 100, der eine geringere Länge in Erstreckungsrichtung, entsprechend der Figur 3, aufweist, kann durch ein entsprechendes Ablängen des zweiten Teilbereichs 124, wie er der Figur 4 dargestellt ist, bereitgestellt werden. Dadurch kann die Umfassung 100 des Zugriffsbereich an unterschiedliche Erstreckung des Zugriffsbereich, durch Ablängen des zweiten Teilbereichs 124 der Umfassung 100 adaptiert werden. Die Vielzahl von Löchern 144 in dem zweiten Teilbereich 124 kann vorbereitend mit teilverschlossenen Löchern bereitgestellt werden oder die Vielzahl von Löchern kann nachträglich eingebracht werden.

Die Figur 5 skizziert schematisch in einer isometrischen Ansicht eine Verbindung zwischen dem Koppel-Adapter-Rahmen 300 und dem Koppel-Rahmen 200. Dabei ist der Koppel-Rahmen 200 in dieser isometrischen Ansicht durch die verbundene zweite Stirnseite 310 des Koppel-Adapter-Rahmens 300 im Wesentlichen verdeckt. Die Verbindung kann dadurch fixiert werden, dass eine Vielzahl von Rastköpfen 240 des Koppel-Rahmens 200, die an einer Stirnseite des Koppel-Rahmens 200 angeordnet sind, in eine Vielzahl von Aussparungen 312 der zweiten Stirnseite 310 des Koppel-Adapter-Rahmens 300 eingreifen können. Dadurch kann die Montage des Koppel-Systems 400 zum Umfassen des Zugriffsbereichs erfolgen, indem eine Vielzahl von Rastköpfen 240 in Eingriff mit der Vielzahl von Aussparungen 312 gebracht und eingerastet, bzw. verriegelt, werden.

Die Figur 6 skizziert schematisch in einer isometrischen Ansicht den Koppel-Adapter-Rahmen 300 für das Toiletten-System 350, welches in einem Inneren des Freizeitfahrzeugs platziert ist. Der Koppel-Adapter-Rahmen 300 umfasst eine umlaufende Rahmenfläche 305, bzw. ein umlaufendes Rahmen-Gehäuse 305, die einen offenen Zugriffsbereich zu der Vorrichtung umschließt. In dem Beispiel der Figur 6 sind in dem offenen Zugangsbereich zumindest Teile des Toiletten-Systems 350 angeordnet, die von dem Koppel-Adapter-Rahmen 300 umfasst werden. Eine erste Stirnseite 320 des Koppel-Adapter-Rahmens 300 ist eingerichtet, eine mechanische Schnittstelle zu dem Toiletten-System 350 zu bilden. Dazu weist die erste Stirnseite 320 eine Mehrzahl von Laschen 322 auf, mit denen der Koppel-Adapter-Rahmen 300 mit der Trennwand, die hier nicht gezeichnet ist, mechanisch zu koppeln. Darüber hinaus weist die erste Stirnseite 320 eine Aussparung 324 für Medienanschlüsse des Toiletten-Systems 350 auf. Ein weiteres Anpassen der ersten Stirnseite 320 an das Toiletten-System 350 kann durch eine weitere Aussparung erfolgen, die sich in die umlaufende Rahmenfläche 305 erstrecken kann, um einen Sockel 352 des Toiletten-Systems 350, mittels des Koppel-Adapter-Rahmens 300, insbesondere für das Koppel-System 400 zum Umfassen des Zugriffsbereichs, zu adaptieren. Eine zweite Stirnseite 310 des Koppel-Adapter-Rahmens 300 ist flanschartig ausgebildet und mittels einer Mehrzahl von Aussparungen 312 eingerichtet, mit dem Koppel-Rahmen der Umfassung zusammenzuwirken, eine lösbare Verbindung zu bilden.

Der Koppel-Adapter-Rahmen 300 der Figur 6 ist, durch die quadratische Ausgestaltung der zweiten Stirnseite 310 des Koppel-Adapter-Rahmens 300 rotations-symmetrisch gestaltet. In Zusammenwirkung mit einer quadratisch ausgestalteten flanschartigen ebenen Stirnfläche 230 des Koppel-Rahmens 200, kann der Koppel-Adapter-Rahmen 300 in einer ersten und einer zweiten Orientierung des Koppel-Rahmens 200 mit dem Koppel-Adapter-Rahmen 300 verbunden werden. Dabei ist die erste Orientierung des Koppel-Rahmens um 90 Grad, um eine Achse senkrecht auf einer freien Öffnung des Koppel-Rahmens 200, gegenüber der zweiten Orientierung gedreht. Dadurch kann, zusammen mit der Umfassung 100, die einen ersten Teilbereich 122 aufweist, der flanschartig ausgestaltet ist, sowohl eine waagerecht liegende rechteckige Öffnung der Außenwand des Freizeitfahrzeug, als auch eine senkrecht angeordnete rechteckige Öffnung den Zugriffsbereich zu der Vorrichtung in dem Inneren des Freizeitfahrzeug mittels der Umfassung und/oder des Koppel-Systems zum umfassen des Zugriffsbereichs verbunden werden.

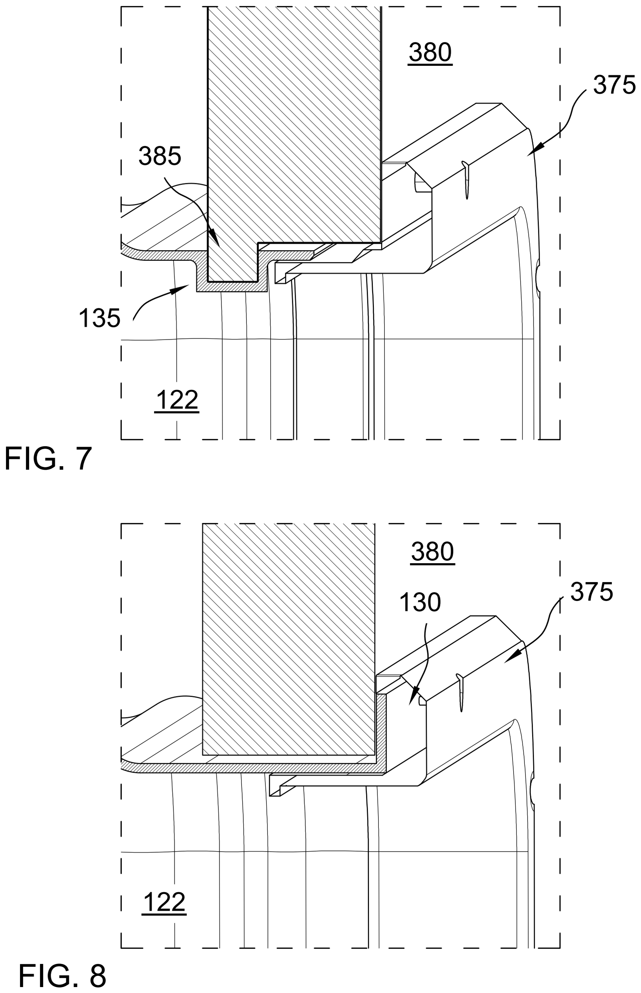

Die Figur 7 skizziert schematisch in einer isometrischen Ansicht eine Verbindung der Umfassung 100 mit der Öffnung der Außenwand des Freizeitfahrzeugs. Dabei weist der flanschartige Rand 135 der Umfassung 100, in einem stirnseitigen Randbereich des ersten Teilbereichs 122, eine Flansch-Sicke 135, insbesondere in allen Flächen der Umfassung 100, auf. Dabei ist die Flansch-Sicke 135 in einen Innenbereich der Umfassung hinein ausgeformt. Die Flansch-Sicke 135 kann eingerichtet sein, mit einem Vorsprung 385 in einem inneren Randbereich der Öffnung zusammenzuwirken, um die Umfassung 100 mit dem Randbereich der äußeren Öffnung zu verbinden.

Dieser Vorsprung 385 kann durch Fräsen der Außenwand 380 und/oder durch Aufsetzen einer Leiste gebildet werden.

D. h., die Umfassung 100 kann mit dem Randbereich der äußeren Öffnung durch Eingreifen des Vorsprungs 385 in die Flansch-Sicke 135 verbunden werden. Dabei kann die Sicke, bzw. der stirnseitige Randbereich des ersten Teilbereichs 122 mittels des Rahmens 375 der Serviceklappe für die äußere Öffnung, in einer vorgesehenen Lage für die Verbindung fixiert werden, indem der Rahmen 375 der Serviceklappe die Flansch-Sicke oder den stirnseitigen Randbereich des ersten Teilbereichs 122, in der Montageposition des Rahmens 375 der Serviceklappe, überlappt.

Die Figur 8 skizziert schematisch in einer isometrischen Ansicht eine weitere Verbindung der Umfassung 100 mit der Öffnung der Außenwand des Freizeitfahrzeugs. Dabei weist der flanschartige Rand 130 der Umfassung 100 in einem stirnseitigen Randbereich des ersten Teilbereichs 122 eine ebene Stirnfläche auf. Die Stirnfläche 130 erstreckt sich, insbesondere im Wesentlichen rechtwinklig, zu den jeweiligen Flächen 112 bis 118 der Umfassung, ausgehend von der Stirnseite des ersten Teilbereichs 122 in einen Außenbereich der Umfassung 100. Die Stirnfläche 130 ist dabei angeordnet und eingerichtet mit einem außen gelegenen Randbereich der Öffnung zusammenzuwirken, um die Umfassung 100 mit dem außen gelegenen Randbereich der äußeren Öffnung zu verbinden. Dabei kann die Stirnfläche und/oder der stirnseitige Randbereich des ersten Teilbereichs 122 mittels des Rahmens 375 der Serviceklappe für die äußere Öffnung, in einer vorgesehenen Lage für die Verbindung fixiert werden, indem der Rahmen 375 der Serviceklappe die Stirnfläche 130 und/oder den stirnseitigen Randbereich des ersten Teilbereichs 122, in der Montageposition des Rahmens 375 der Serviceklappe, überlappt.

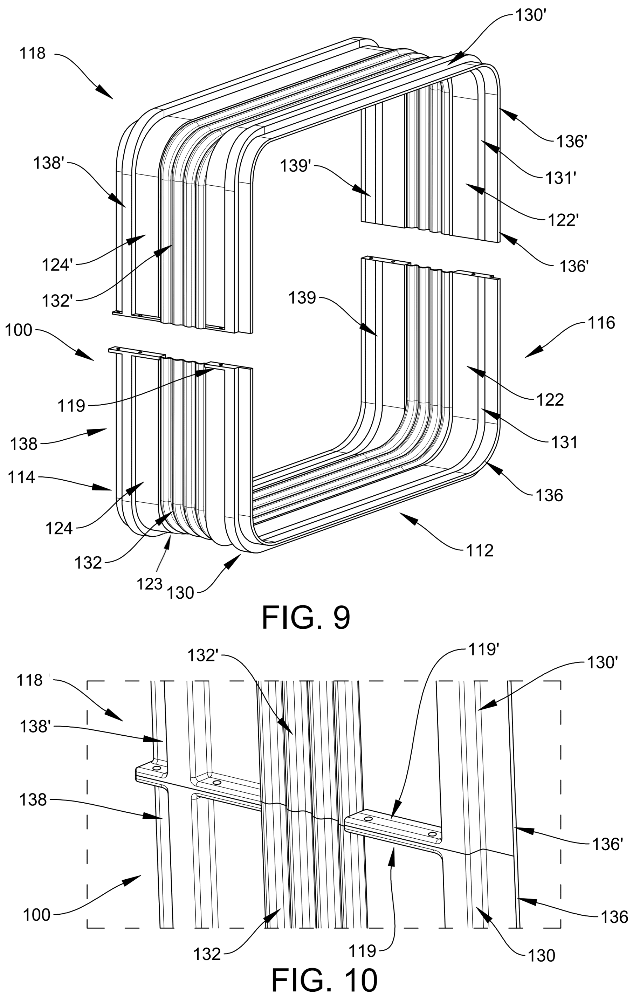

Die folgenden Figuren 9 bis 16 beschreiben weitere Ausführungsformen der Erfindung.

Die Figur 9 skizziert im unteren Teil schematisch in einer isometrischen Ansicht einer Umfassung 100 für einen Zugriffsbereich zu einer Vorrichtung 350. Die Umfassung 100 weist eine Bodenfläche 112, eine erste Seitenfläche 114 und eine zweite Seitenfläche 116 auf, wobei die erste Seitenfläche 114 und die zweiten Seitenfläche 116 jeweils mit gegenüberliegenden äußeren Rändern der Bodenfläche 112 einteilig verbunden sind, um den Zugriffsbereich zumindest teilweise, insbesondere u-förmig, zu umfassen.

Die Umfassung 100 weist einen zweiten Teilbereich 124 auf, der sich an einen Rand 123 des ersten Teilbereichs 122 anschließt, und mit dem ersten Teilbereich 122, insbesondere einteilig, verbunden ist. Dabei weist die Bodenfläche 112 und die erste Seitenfläche 114 und zweite Seitenfläche 116 in dem ersten Teilbereich 122 eine wellenartige und/oder gefaltete Struktur 132 auf, um flexibel zu sein, und insbesondere um eine räumliche Fehl-Ausrichtung zwischen einer Umrandung der Öffnung der Außenwand 380 und einer Positionierung der Vorrichtung 350 auszugleichen.

Der erste Teilbereich 122 der Umfassung 100, weist an der Stirnseite des ersten Teilbereichs 122 einen flanschartigen Rand 130 auf, der insbesondere an den ersten Teilbereich 122 angrenzt, wobei der flanschartige Rand 130 eingerichtet ist, die Umfassung 100, insbesondere bündig, mit der Umrandung der Öffnung zu verbinden. Der flanschartige Rand 130 ist entsprechend einer ersten Sicke 130 ausgestaltet, wobei sich die erste Sicke 130, insbesondere im Wesentlichen rechtwinklig zu den Flächen 112,114,116 der Umfassung 100, ausgehend von der Stirnseite des ersten Teilbereichs 122, in einen Außenbereich der Umfassung 100 erstreckt. Zusätzlich kann die wellenartige und/oder gefaltete Struktur 132 der Flächen 112,114,116 des ersten Teilbereichs 122 mit einem dehnbaren Material eingerichtet sein, flexibel zu sein.

Der zweiten Teilbereich 124 der Umfassung 100 weist an seiner Stirnseite eine zweite Sicke 138 auf, wobei sich die zweite Sicke 138, insbesondere im Wesentlichen rechtwinklig zu den Flächen 112,114,116 der Umfassung 100, ausgehend von der Stirnseite des zweiten Teilbereichs 122, in einen Außenbereich der Umfassung 100 erstreckt.

Dabei ist die zweite Sicke 138 eingerichtet, mit einem Randbereich eines Adapter-Rahmens 300 oder einem Randbereich der Vorrichtung 350 zusammenzuwirken, um die Umfassung 100 mit einer Stirnseite des Adapter-Rahmens oder einem Randbereich der Vorrichtung zu verbinden.

Die Figur 9 skizziert im oberen Teil schematisch in einer isometrischen Ansicht eine Deckfläche 118, die eingerichtet ist, mit der Umfassung 100 zusammenzuwirken, um eine Umfassung 100 mit einer umlaufenden Umfassungs-Fläche zu bilden, welche den Zugriffsbereich tunnelartig umschließt. Dabei weist die Deckfläche 118 alle beschriebenen Merkmale der Bodenfläche 112 und der ersten Seitenfläche 114 und der zweiten Seitenfläche 116 analog auf und die analogen Merkmale sind in der Figur mit einem Apostroph gekennzeichnet.

Dabei weisen die zwei Seitenflächen 114, 116, zum Verbinden mit korrespondierend ausgestalteten zweiten Koppeleinrichtungen 119' der Deckfläche 118, jeweils eine erste Koppeleinrichtung 119 auf, um die Seitenflächen 114, 116 mit der Deckfläche 118, insbesondere lösbar, zu verbinden. Die erste Koppeleinrichtung 119 und die zweite Koppeleinrichtung 119' sind eingerichtet so zusammenzuwirken, dass die Umfassung 100 flexibel ist, um insbesondere die räumliche Fehl-Ausrichtung zwischen der Umrandung der Öffnung der Außenwand 380 und der Positionierung der Vorrichtung 350 auszugleichen. Dazu können die wellenartigen und/oder gefalteten Strukturen der Seitenflächen 114, 116 stumpf auf die wellenartigen und/oder gefalteten Strukturen der Deckfläche 118 stoßen oder flexibel miteinander überlappen.

Mit anderen Worten, sind der erste Teilbereich 112, 116 und der zweiten Teilbereich 114, 118 jeweils U-förmig ausgebildet und weisen die erste Sicke 130 und die zweite Sicke 138 an den jeweiligen Stirnseiten auf. Die Sicken 130 und 138 verlaufen umlaufend um die Seiten und die Bodenfläche der Umfassung 100 und dienen der mechanischen Verbindung mit angrenzenden Bauteilen, wie der Außenwand oder einem Adapter. Die einzelnen Teilbereiche sind einteilig flexibel miteinander verbunden.

Die Figur 10 skizziert schematisch in einer isometrischen Ansicht wie eine der zwei Seitenflächen 114,116 eine erste Koppeleinrichtung 119 aufweist, die eingerichtet ist, mit einer jeweiligen zweiten Koppeleinrichtung 119' der Deckfläche 118 so zusammenzuwirken, dass die Umfassung 100 auch mit verbundener Deckfläche 118 flexibel ist, um insbesondere die räumliche Fehl-Ausrichtung zwischen der Umrandung der Öffnung der Außenwand 380 und der Positionierung der Vorrichtung 350 auszugleichen. Dabei können die Koppeleinrichtungen 119, 119' so zusammenwirken, dass die Verbindung lösbar ist.

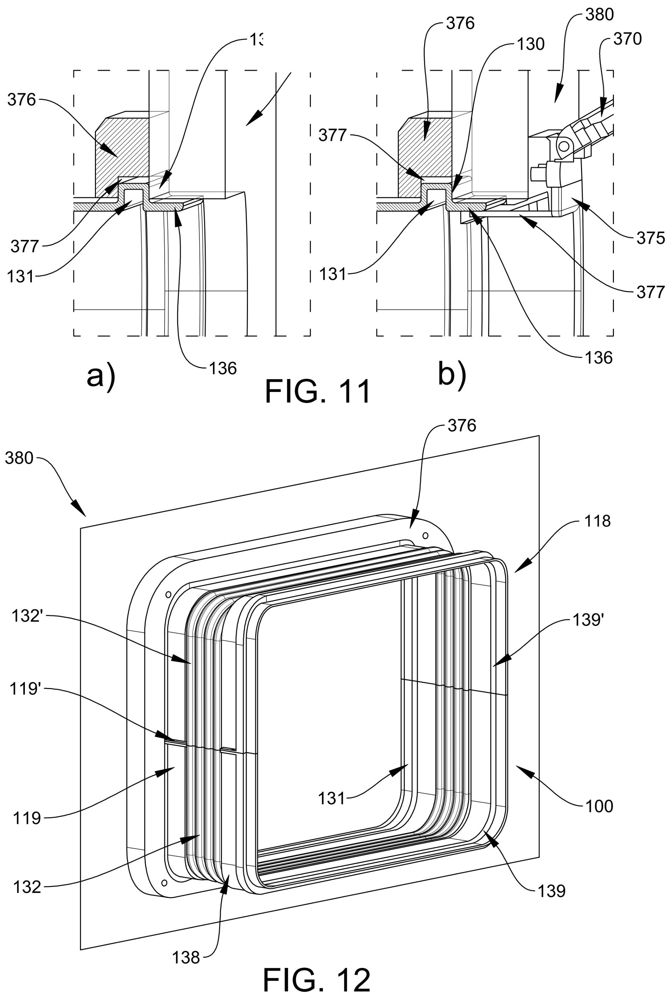

Die Figur 11a skizziert schematisch in einer isometrischen Ansicht, wie die Umfassung 100 eingerichtet ist, mit der Innenseite der Öffnung der Außenwand 380 verbunden zu werden. Dazu stößt eine Stirnfläche der ersten Sicke 130 an einen Rand der Innenseite der Öffnung der Außenwand 380. Der Randbereich der Öffnung ist eingerichtet, mittels eines Innen-Rahmens 376 eine erste Nut 377 auszubilden. Dabei sind die erste Nut 377 und die erste Sicke 130 eingerichtet zusammenzuwirken, um die erste Sicke 130 mit dem Randbereich der Öffnung der Aussenwand 380 zu verbinden. Dabei ist die erste Sicke 130 eingerichtet, eine erste Fülleinlage 900 aufzunehmen, so dass die erste Sicke 130 mittels der ersten Fülleinlage 900 kraftschlüssig und/oder formschlüssig mit der ersten Nut 377 zusammenwirkt, um die erste Sicke 130 mit dem Randbereich der Öffnung zu verbinden. Die erste Fülleinlage, die als Drahtspange oder als Keder ausgebildet sein kann, ist in der Figur 11 nicht dargestellt. Eine Dichtlasche 136 kann sich, ausgehend von der ersten Sicke 130, in die Öffnung der Außenwand 380 erstrecken.

Die Figur 11 b skizziert schematisch in einer isometrischen Ansicht, wie ein Außen-Rahmen 375, der mit einer Service-Klappe 370 gekoppelt ist, an eine Außenseite der Außenwand 380 gekoppelt sein kann und einen Verbindungsteg 377 aufweisen kann, der mit der Dichtlippe 136 der Umfassung 100 überlappt, um eine Verbindung des Außen-Rahmens 375 mit der Umfassung zu dichten.

Die Figur 12 skizziert schematisch in einer isometrischen Innen-Ansicht auf die Öffnung der Außenwand 380, wie der Innen-Rahmen 376 mit der hier tunnelartig geformten Umfassung 100 zusammenwirkt, um die Umfassung 100 mit der Innenseite der Außenwand 380 zu koppeln. Die weiteren Bezugszeichen entsprechen den vorher beschriebenen Bezugszeichen.

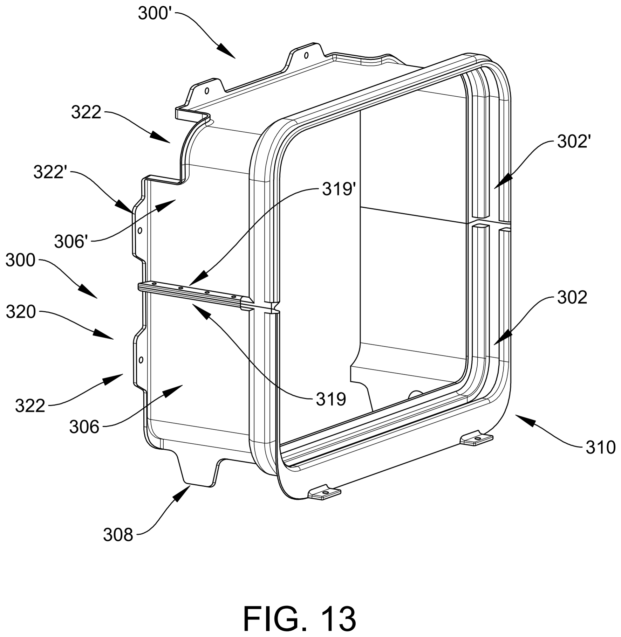

Die Figur 13 skizziert schematisch in einer isometrischen Ansicht einen zweiteiligen Adapter-Rahmen 300, der eingerichtet ist, an einer ersten Stirnseite 320 des Adapter-Rahmens 300 eine mechanische Schnittstelle zu einer Vorrichtung 350 zu bilden und einen offenen Zugriffsbereich zu der Vorrichtung 350 zumindest teilweise zu umschließen. Eine zweite Stirnseite 310 des Adapter-Rahmens 300 weist eine Adapter-Nut 302 auf. Dabei ist die Adapter-Nut 302 eingerichtet, mit der zweiten Sicke 130 der Umfassung 100 zusammenzuwirken, um die Umfassung 100 mit der zweiten Stirnseite des Adapter-Rahmens 300 zu verbinden.

Der Adapter-Rahmen 300 der Figur 13 ist zweiteilig ausgeführt, wobei die Rahmenfläche 306 des Adapter-Rahmens 300 zwei Seitenflächen und eine Bodenfläche aufweist. Die zwei Seitenflächen und die Bodenfläche sind dabei einteilig ausgestaltet. Zum Verbinden der 2 Seitenflächen des Adapterrahmens mit einer Deckfläche 300' weisen die zwei Seitenflächen an ihrem jeweils offenen Ende eine erste Adapter-Koppeleinrichtung 319 auf. Diese erste Adapter-Koppeleinrichtung 319 ist eingerichtet, mit einer korrespondierenden jeweiligen zweiten Adapter-Koppeleinrichtung 319' einer Deckfläche 300' des Adapter-Rahmens 300 mit den zwei Seitenflächen zu verbinden, um einen tunnelartigen Adapter-Rahmen 300 um den Zugriffsbereich zu der Vorrichtung 350 zu bilden. Weiterhin ist in der Figur 13 eine Stabilisierungs-Lasche 308 angrenzend an den Rahmen-Adapter 300 zu erkennen, die eine Kopplung des Rahmen-Adapters 300 mit einer Auflagefläche des Freizeitfahrzeugs ermöglicht.

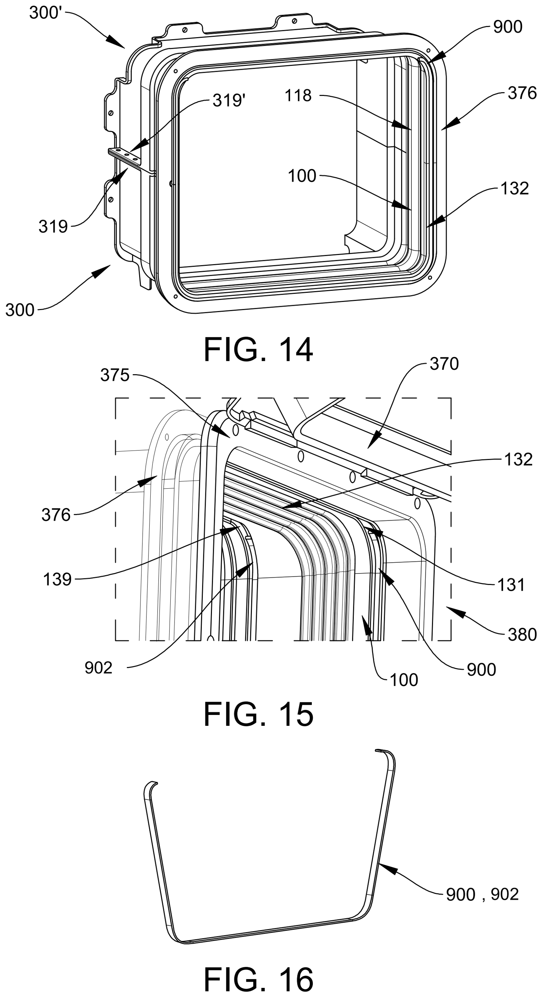

Die Figur 14 skizziert schematisch in einer isometrischen Ansicht ein System zum umfassen des Zugriffsbereichs zu der Vorrichtung 350. Das System weist eine Umfassung 100 und einen Adapter-Rahmen 300, wie oben beschrieben, auf. Dabei ist der Adapter-Rahmen 300 mit der Umfassung 100 mittels einer zweiten Sicke 138 der Umfassung, die mit einer Adapter-Nut 302 des Adapter-Rahmens 300 zusammenwirkt, lösbar verbunden. Weiterhin ist in der Figur 14 dargestellt, wie ein Innen-Rahmen 376, der eine erste Nut 377 aufweist, mit der ersten Sicke 130 und einer ersten Fülleinlage 900 zusammenwirkt, um die Umfassung 100 mit einem Rand der Öffnung der Außenwand 380 zu verbinden.

Dabei kann der Innen-Rahmen 376 beispielsweise mit einer inneren Seite der Außenwand 380 verschraubt werden.

Die Figur 15 skizziert schematisch in einer isometrischen Ansicht einen Blick in die geöffnete Service-Klappe 370, die mittels eines Außen-Rahmens 375 mit der Außenwand 380 gekoppelt ist. Dabei ist durch die Öffnung der Außenwand 380 die wellenartige und/oder gefaltete Struktur 123 der Flächen 112, 114, 116 der Umfassung 100 dargestellt, die mittels des Zusammenwirkens der ersten Sicke 130 und der ersten Fülleinlage 900 mit der Innenseite der Außenwand 380 verbunden sind. Weiterhin ist der in der Figur 15 erkennbar, wie die zweite Sicke 138 mittels der zweiten Fülleinlage 902 in der Nut 139 der zweiten Sicke mit dem Adapter-Rahmen 300, bzw. 300', verbunden ist.

Die Figur 16 skizziert schematisch in einer isometrischen Ansicht eine erste bzw. zweite Fülleinlage 900, bzw. 902 die als Drahtbügel ausgebildet ist, um in die Nut 131 bzw. 139 der ersten, bzw. zweiten Sicke 130, 138, für eine Ausbildung eines Form- und/oder Kraftschlusses, eingelegt zu werden.

### BEZUGSZEICHENLISTE

- 100, 100': Umfassung
- 112: Bodenfläche
- 114: erste Seitenfläche
- 116: zweite Seitenfläche
- 118: Deckfläche
- 119, 119': Koppeleinrichtungen
- 122: erste Teilbereich der Umfassung
- 123: Rand des ersten Teilbereichs
- 124, 124': zweite Teilbereich der Umfassung
- 130, 130': erste flanschartige Rand / erste Sicke
- 131, 131': Nut der ersten flanschartigen Kopplungsvorrichtung
- 132, 132': wellenartige Struktur des ersten Teilbereichs
- 135: Sicke
- 136, 136': Dichtlasche
- 138, 138': zweite Sicke
- 139, 139': Nut der zweiten flanschartigen Kopplungsvorrichtung
- 142: Lochreihe
- 144: Lochreihe
- 200: Koppel-Rahmen
- 220: Rahmen-Gehäuse des Koppel-Rahmens
- 222: Noppen
- 224: Klemmvorrichtung
- 226: Sicherungsschraube
- 240: Rastköpfe umlaufend positionierte Rastelemente
- 300: Adapter-Rahmen
- 300': Deckfläche des Adapter-Rahmens
- 302, 302': Adapter-Nut
- 305: umlaufende Rahmenfläche
- 306, 306': Rahmenfläche des Adapter-Rahmens
- 308: Stabilisierung-Lasche
- 310: zweite Stirnseite des Adapter-Rahmens
- 312: Aussparung der zweiten Stirnseite des Adapter-Rahmens
- 320: erste Stirnseite des Adapter-Rahmens
- 320: Schnittstelle des Adapter-Rahmens
- 322, 322': Adapterlasche
- 324: Aussparung für Medienanschlüsse
- 350: Vorrichtung, Toiletten-System
- 352: Sockel des Toiletten-Systems
- 370: Serviceklappe
- 375: Außen-Rahmen der Serviceklappe
- 376: Innen-Rahmen der Serviceklappe
- 377: Verbindungsteg des Außen-Rahmens
- 380: Außenwand eines Freizeitfahrzeugs
- 385: Vorsprung im Inneren Randbereich der Öffnung
- 400: System zum Umfassen
- 900: erste Fülleinlage
- 902: zweite Fülleinlage

## Patentansprüche

1. Umfassung (100) eines Zugriffsbereichs,
wobei sich der Zugriffsbereich von einer Öffnung einer Außenwand (380) eines Freizeitfahrzeugs zu einer Vorrichtung (350) in einem Inneren des Freizeitfahrzeugs erstreckt, die Umfassung (100) aufweisend:
eine Bodenfläche (112), eine erste Seitenfläche (114) und eine zweite Seitenfläche (116), wobei die erste Seitenfläche (114) und die zweiten Seitenfläche (116) jeweils mit gegenüberliegenden äußeren Rändern der Bodenfläche (112) verbunden sind, um den Zugriffsbereich zumindest teilweise zu umfassen;
einen ersten Teilbereich (122) der Umfassung (100), wobei die Bodenfläche (112) und die erste Seitenfläche (114) und zweite Seitenfläche (116) in dem ersten Teilbereich (122) eingerichtet sind, flexibel zu sein, um insbesondere eine räumliche Fehl-Ausrichtung zwischen einer Umrandung der Öffnung und einer Positionierung der Vorrichtung (350) auszugleichen; und
einen flanschartigen Rand (130), der insbesondere an den ersten Teilbereich (122) angrenzt, wobei der flanschartige Rand (130) eingerichtet ist, die Umfassung (100), insbesondere bündig, mit der Umrandung der Öffnung zu verbinden.

2. Umfassung (100) gemäß Anspruch 1, wobei die zwei Seitenflächen (114,116) und die Bodenfläche (112) einteilig ausgestaltet sind; und/oder wobei die Verbindung der Bodenfläche (112) mit der jeweiligen Seitenfläche (114,116) fugenlos ausgestaltet ist; und wobei insbesondere ein Material, welches die Flächen (112,114,116) des ersten Teilbereichs (122) bildet, elastische Eigenschaften aufweist.

3. Umfassung (100) gemäß Anspruch 1 oder 2, wobei der erste Teilbereich (122) mittels einer, insbesonder um die Seitenflächen und Bodenfläche umlaufenden, wellenartigen und/oder gefalteten Struktur (132) der Flächen (112,114,116) des ersten Teilbereichs (122) eingerichtet ist, flexibel zu sein; und/oder mittels eines dehnbaren Materials eingerichtet ist, flexibel zu sein.

4. Umfassung (100) gemäß einem der vorangehenden Ansprüche, wobei der flanschartige Rand (130) entsprechend einer ersten Sicke (130) ausgestaltet ist, und wobei sich die erste Sicke (130), insbesondere im Wesentlichen rechtwinklig zu den Flächen (112,114,116) der Umfassung (100), ausgehend von einer Stirnseite des ersten Teilbereichs (122), in einen Außenbereich der Umfassung (100) erstreckt.

5. Umfassung (100) gemäß Anspruch 4, wobei die erste Sicke (130) eingerichtet ist, mit einem, insbesondere innen gelegenen, Randbereich der Öffnung der Aussenwand (380) zusammenzuwirken, um die Umfassung (100) mit dem innen gelegenen Randbereich der äußeren Öffnung der Aussenwand (380) zu verbinden.

6. Umfassung (100) gemäß Anspruch 4 oder 5, wobei der Randbereich der Öffnung, insbesondere mittels eines Innen-Rahmens (376), eingerichtet ist, eine erste Nut (377) auszubilden; und die erste Nut (377) und die erste Sicke (130) eingerichtet sind, zusammenzuwirken, um die erste Sicke (130) mit dem Randbereich der Öffnung der Aussenwand (380) zu verbinden.

7. Umfassung (100) gemäß Anspruch 6, wobei die erste Sicke (130) eingerichtet ist, eine erste Fülleinlage (900) aufzunehmen, so dass insbesondere die erste Sicke (130) mittels der ersten Fülleinlage (900) kraftschlüssig und/oder formschlüssig mit der ersten Nut (377) zusammenwirkt, um die erste Sicke (130) mit dem Randbereich der Öffnung zu verbinden; und wobei besonders vorteilhafterweise die erste Fülleinlage (900) als Drahtspange oder als Keder ausgebildet ist.

8. Umfassung (100) gemäß einem der vorangehenden Ansprüche, aufweisend:
einen zweiten Teilbereich (124), der, angrenzend an einen, der Stirnseite des ersten Teilbereichs (122) gegenüberliegenden, Rand (123) des ersten Teilbereichs (122), mit dem ersten Teilbereich (122) verbunden ist, wobei der zweite Teilbereich (124) an seiner Stirnseite eine zweite Sicke (138) aufweist, und wobei sich die zweite Sicke (138), insbesondere im Wesentlichen rechtwinklig zu den Flächen (112,114,116) der Umfassung (100), ausgehend von der Stirnseite des zweiten Teilbereichs (122), in einen Außenbereich der Umfassung (100) erstreckt.

9. Umfassung (100) gemäß einem der vorhergehenden Ansprüche, wobei die Umfassung (100) zusätzlich eine Deckfläche (118) aufweist, sodass die Umfassung (100) eine umlaufende Umfassungs-Fläche bildet, welche den Zugriffsbereich tunnelartig umschließt, und wobei die Deckfläche (118) alle beschriebenen Merkmale der Bodenfläche (112) und der ersten Seitenfläche (114) und der zweiten Seitenfläche (116) analog aufweist.

10. Umfassung (100) gemäß Anspruch 9, wobei die zwei Seitenflächen (114,116) und die Bodenfläche (112) einteilig ausgestaltet sind; und die zwei Seitenflächen (114,116), zum Verbinden mit korrespondierend ausgestalteten zweiten Koppeleinrichtungen (119') der Deckfläche (118), jeweils eine erste Koppeleinrichtung (119) aufweisen, wobei insbesondere die erste Koppeleinrichtung (119) und die zweite Koppeleinrichtung (119') eingerichtet sind so zusammenzuwirken, dass die Umfassung (100) flexibel ist, um insbesondere die räumliche Fehl-Ausrichtung zwischen der Umrandung der Öffnung der Aussenwand (380) und der Positionierung der Vorrichtung (350) auszugleichen.
lösbare Verbindung

11. Adapter-Rahmen (300) für eine Vorrichtung (350) in einem Inneren des Freizeitfahrzeugs, aufweisend:
eine Rahmenfläche (306), die einen offenen Zugriffsbereich zu der Vorrichtung (350) zumindest teilweise umschließt;
eine erste Stirnseite (320) des Adapter-Rahmens, die eingerichtet ist, eine mechanische Schnittstelle zu der Vorrichtung (350) zu bilden; und
eine zweite Stirnseite (310) des Adapter-Rahmens (300), wobei die zweite Stirnseite eine Adapter-Nut (302) aufweist, und wobei die Adapter-Nut (302) eingerichtet ist, mit einer zweiten Sicke (130) einer Umfassung (100) zusammenzuwirken, um die Umfassung (100) mit der zweiten Stirnseite des Adapter-Rahmens (300) zu verbinden.

12. Adapter-Rahmen (300) gemäß Anspruch 11, wobei der Adapter-Rahmen (300) zweiteilig ausgeführt ist, und wobei die Rahmenfläche (306) zwei Seitenflächen und eine Bodenfläche aufweist, und wobei die zwei Seitenflächen und die Bodenfläche einteilig ausgestaltet sind; und die zwei Seitenflächen, zum Verbinden mit korrespondierend ausgestalteten zweiten Adapter-Koppeleinrichtungen (319') einer Deckfläche (300'), jeweils eine erste Adapter-Koppeleinrichtung (319) aufweisen.

13. Adapter-Rahmen (300) gemäß Anspruch 11 oder 12, wobei die Vorrichtung (350) eine Sanitärvorrichtung für ein Freizeitfahrzeug ist; und wobei die Vorrichtung (350) insbesondere ein Toiletten-System für ein Freizeitfahrzeug ist.

14. System zum Umfassen eines Zugriffsbereichs zu einer Vorrichtung (350) in einem Inneren eines Freizeitfahrzeugs, aufweisend:
eine Umfassung (100), gemäß einem der Ansprüche 1 bis 10; und
einen Adapter-Rahmen (300), gemäß einem der Ansprüche **11** bis 13; wobei die Umfassung (100) eine zweite Sicke (138) aufweist,, und der Adapter-Rahmen (300) mittels eines Zusammenwirkens der zweiten Sicke (138) mit einer Adapter-Nut (302) des Adapter-Rahmens (300) mit der Umfassung (100) lösbar verbunden ist.

15. Freizeitfahrzeug, aufweisend:
einen Zugriffsbereich, der sich von einer Öffnung einer Außenwand (380) des Freizeitfahrzeugs zu einer Vorrichtung (350) oder einem Adapter-Rahmen (300) der Vorrichtung in einem Inneren des Freizeitfahrzeugs erstreckt; und
eine Umfassung (100), welche den Zugriffsbereich zumindest teilweise umfasst, wobei insbesondere der Adapter-Rahmen (300) eingerichtet ist, bündig mit der Umfassung (100) gekoppelt zu werden, und wobei besonders vorteilhafterweise die Umfassung (100) gemäß einem der Ansprüche 1 bis 10 ausgestaltet ist.
